# EUROPÄISCHE PATENTSCHRIFT

(11) **EP 2 561 247 B1**
(45) Veröffentlichungstag und Bekanntmachung des Hinweises auf die Patenterteilung: **01.04.2015**
(21) Anmeldenummer: 11725304.7
(22) Anmeldetag: 22.04.2011
(51) Int. Cl.: F16F 15/26

(54) **HUBKOLBEN-VERBRENNUNGSKRAFTMASCHINE MIT MASSENAUSGLEICHSVORRICHTUNG**
RECIPROCATING-PISTON INTERNAL COMBUSTION ENGINE WITH MASS BALANCING DEVICE
MOTEUR À COMBUSTION INTERNE À PISTON ALTERNATIF ÉQUIPÉ D'UN DISPOSITIF D'ÉQUILIBRAGE DES MASSES

(30) Priorität: 23.04.2010 AT 6642010
(43) Veröffentlichungstag der Anmeldung: 27.02.2013
(73) Patentinhaber: Steyr Motors GmbH, 4407 Steyr (AT)
(72) Erfinder: ASCHABER, Michael, A-4421 Aschach (AT); WAGNER, Josef, A-3354 Wolfern (AT)
(74) Vertreter: Burger, Hannes
(86) Internationale Anmeldenummer: PCT/AT2011/000206
(87) Internationale Veröffentlichungsnummer: WO 2011/130772

(56) Entgegenhaltungen:
- DE-A1- 3 120 190
- DE-U1- 29 614 589
- GB-A- 1 065 686
- GB-A- 190 414 797
- US-B1- 6 732 697

## Beschreibung

Die Erfindung betrifft eine Hubkolben-Verbrennungskraftmaschine mit wenigstens einem Motorzylinder und wenigstens einem darin oszillierenden Motorkolben, welche Hubkolben-Verbrennungskraftmaschine wenigstens eine über eine Kurbelkröpfung und ein Ausgleichspleuel von einer Kurbelwelle oszillierend angetriebene Ausgleichsmasse zum Ausgleich von Massenkräften und gegebenenfalls Massenmomenten umfasst, wie dies im Anspruch 1 angegeben ist.

Aus der DE 30 34 978 A1 ist eine Einrichtung zum Ausgleich freier Massenmomente wenigstens der ersten und zweiten Ordnung von Hubkolben-Kurbelwellenmaschinen bekannt. Ziel dieser Einrichtung ist es, die freien Massenmomente, die zu einem relativ unruhigen Lauf führen, möglichst auszugleichen bzw. zu eliminieren. Insbesondere bei Reihenmaschinen mit ungerader Zylinderzahl, wie beispielsweise Dreizylinder- oder Fünfzylindermotoren, oder bei V6-Motoren, treten freie Massenmomente auf, welche, um einen komfortablen Lauf des Motors sicherzustellen, möglichst ausgeglichen werden sollten. Hierzu ist vorgesehen, dass symmetrisch zur Mitte der Kurbelwelle über Kurbeltriebe angetriebene, oszillierende Ausgleichsmassen,ausgebildet sind, die bezüglich der Kurbelwelle auf einander entgegengesetzten Seiten angeordnet und mit einander diametral entgegen gerichteten Kurbelkröpfungen verbunden sind. Insbesondere ist dabei in Bezug auf die Längsachse der Kurbelwelle an dessen vorderen und hinteren Ende jeweils eine oszillierende Ausgleichsmasse vorgesehen, welche insgesamt die freien Massenmomente, beispielsweise eines Dreizylinder-Motors, ausgleichen sollen. Diese Ausgleichsmassen sind dabei entweder in Geradführungen am feststehenden Motorgehäuse geführt oder alternativ durch am feststehenden Gehäuse angelenkte Lenker, insbesondere durch wenigstens eine Schwinge, geführt. Wie diese Führungen bzw. Lagerungen für die Ausgleichsmasse baulich auszuführen sind, ist dieser Druckschrift nicht zu entnehmen. Außerdem wird durch die Mehrfachanordnung von oszillierenden Ausgleichsmassen der konstruktive Aufwand erhöht und damit einhergehend der Bauraumbedarf vergrößert und eine nachteilige Erhöhung der Aufbaukosten verursacht.

Aus der DE 30 40 686 A1 ist eine Einrichtung zum Ausgleich der Massenkräfte zweiter Ordnung von Vierzylinder-Reihen-Kurbelwellenmaschinen mit symmetrisch zur Kurbelwellenmitte angeordneten Kurbelkröpfungen bekannt. Dabei ist eine über einen Kurbeltrieb von der Kurbelwelle angetriebene Ausgleichsmasse vorgesehen, die in der Kurbelwellenmitte in der Ebene der Arbeitszylinder auf der von den Arbeitszylindern abgewandten Seite der Kurbelwelle im wesentlichen oszillierend gehalten ist und deren Kurbelkröpfung in der Ebene der Kurbelkröpfungen der Arbeitszylinder angeordnet ist. Dabei wird vorgeschlagen, die Ausgleichsmasse in einer Geradführung am feststehenden Gehäuse in der Ebene der Arbeitszylinder oszillierend zu führen, oder alternativ von einem an dem feststehenden Gehäuse schwenkbar gehaltenen Lenker zu führen. Maßnahmen zur Dimensionierung der Massenausgleichseinrichtung wurden ebenso vorgeschlagen. Eine praktikable Ausführung der Schwingenlagerung bzw. der Geradführung für die Ausgleichsmasse ist dieser Druckschrift nicht zu entnehmen.

Auch die DE 31 20 190 A1 beschreibt eine Hubkolben-Verbrennungskraftmaschine mit wenigstens einer über einen Kurbeltrieb von der Kurbelwelle oszillierend angetriebenen Ausgleichsmasse. Den zum Ausgleich der freien Massenkräfte und Massenmomente vorgesehenen Ausgleichsmassen sind dabei zusätzliche technische Aufgaben zugeordnet, beispielsweise in Form einer Ladepumpe für die Arbeitszylinder der Verbrennungskraftmaschine. Insbesondere ist dabei die Ausgleichsmasse als in einem Zylinder gleitender Kolben ausgeführt, der zudem als eine die Arbeitszylinder der Brennkraftmaschine aufladende Kolbenpumpe fungiert. Im speziellen bei einer Zweizylinder-Reihen-Viertakt-Verbrennungskraftmaschine mit zwei mit der Kurbelwelle über gleichphasig angeordnete Kurbelkröpfungen verbundenen Motorkolben, ist die Ladepumpe durch einen dritten Zylinder gebildet, der den Zylindern des Motors bezüglich der Kurbelwellenachse diametral gegenüberliegend angeordnet ist und mit einem zugeordneten Kolben versehen ist, der von einer den Kröpfungen der Motorkolben diametral gegenüberliegenden Kröpfung der Kurbelwelle angetrieben ist. Die Reibungsverluste, welche zwischen dem die Ausgleichsmasse definierenden Kolben und dem Zylinder entstehen, können durch Anordnung eines hydrostatischen Gleitlagers reduziert werden, wobei das hydrostatische Gleitlager an den Schmiermittelkreislauf des Motors angeschlossen ist. Hierbei wird der Ausgleichsmasse also eine technische Zusatzfunktion zugeordnet. Die entsprechend notwendigen baulichen Vorkehrungen sind jedoch aufwändig und insgesamt relativ kostenintensiv. Die hierbei vorgeschlagene, in einem Zylinder linear geführte Ausgleichsmasse mit einem technischen Zusatznutzen in Form einer Ladepumpe für die Arbeitszylinder hat sich in der Praxis kaum bewährt.

Darüber hinaus ist aus der DE 36 07 133 A1 eine Einrichtung zum Ausgleich von freien Massenkräften und Massenmomenten einer Hubkolben-Verbrennungskraftmaschine bekannt. Dabei ist zumindest eine Ausgleichsmasse vorgesehen, die von einer Exzenter- oder Nockenanordnung angetrieben wird. Um der Massenausgleichseinrichtung weiteren technischen Nutzen zuzuordnen, beaufschlagt die Ausgleichsmasse zumindest ein Antriebsglied eines Nebenaggregates in direkter oder indirekter Form. Infolge der Vereinigung des Massenausgleichs mit dem Antrieb von Nebenaggregaten soll ein besonders einfacher und kompakter Aufbau einer Verbrennungskraftmaschine erzielt werden. Derartige Nebenaggregate können dabei durch einen Luftverdichter, eine Hydraulikpumpe, einen Generator, eine Lenkhilfspumpe oder einen Klimakompressor gebildet sein. Die über einen Nocken oszillierend bewegte Ausgleichsmasse ist dabei entweder rahmen- oder balkenartig ausgeführt, wobei der Stellnocken mittig auf die Ausgleichsmasse einwirkt und die Ausgleichsmasse über eine längsmittig angeordnete Kolbenführung linear verstellbar geführt ist. Auch diese Ausgestaltung hat sich in der Praxis wenig bewährt.

Der vorliegenden Erfindung liegt die Aufgabe zugrunde, eine Hubkolben-Verbrennungskraftmaschine mit einem Massenausgleichssystem zu schaffen, welches eine möglichst hohe Laufruhe, insbesondere eine möglichst hohe Vibrationsarmut gewährleistet und welches zugleich eine möglichst kostengünstige und praktikable Umsetzung ermöglicht.

Diese Aufgabe der Erfindung wird durch eine Hubkolben-Verbrennungskraftmaschine gemäß Anspruch 1 gelöst.

Ein sich durch eine Hubkolben-Verbrennungskraftmaschine mit den Merkmalen nach Anspruch 1 ergebender Vorteil liegt darin, dass dieses Massenausgleichssystem zum einen einen besonders kompakten Aufbau der Hubkolben-Verbrennungskraftmaschine ermöglicht, sodass diese auch bei beengten Einbauverhältnissen relativ problemlos untergebracht werden kann. Insbesondere sind die durch diesen Massenausgleich erforderlichen Erhöhungen des Bauraumes bzw. des letztendlichen Platzbedarfs vergleichsweise gering, sodass ein entsprechend aufgebauter Hubkolben-Verbrennungsmotor im Vergleich zu einem herkömmlich aufgebauten Hubkolben-Verbrennungsmotor ohne einem Massenausgleichssystem nur geringfügig größere Abmessungen aufweist. Außerdem ist die Laufruhe eines derartigen Hubkolben-Verbrennungskraftmotors relativ hoch und ist eine hohe Vibrationsarmut auch bei niedriger Zylinderanzahl bzw. bei gleichphasig oder synchron arbeitenden Motorkolben erzielbar. Ein weiterer wesentlicher Vorteil der erfindungsgemäßen Ausbildung liegt darin, dass ein derartiges Massenausgleichssystem relativ kostengünstig produziert werden kann, sodass eine wirtschaftliche Herstellung und preiswerte Anschaffung ermöglicht ist, wodurch ein relativ breites Einsatzspektrum bedient werden kann. Ein weiterer, wesentlicher Vorteil der angegebenen Ausgestaltung liegt darin, dass eine erfindungsgemäß ausgeführte Hubkolben-Verbrennungskraftmaschine eine hohe Standfestigkeit erzielen kann, insbesondere relativ langfristig eine hohe Wartungsfreiheit aufweist. Insbesondere kann mit einer derartigen Ausgestaltung den Anforderungen an die übliche Standfestigkeit bzw. Wartungsfreiheit problemlos Rechnung getragen werden.

Von besonderer Bedeutung ist dass mit möglichst geringem bzw. minimalen Bauraumbedarf ein nahezu vollständiger Ausgleich der freien Massenmomente bzw. Massenkräfte der Hubkolben-Verbrennungskraftmaschine erzielt werden kann. Von besonderem Vorteil ist dabei, dass sich die Anzahl der benötigten Komponenten bzw. die Teilevielfalt in Grenzen hält bzw. relativ niedrig ist.

Weiterhin wird dadurch eine kippfreie Lagerung bzw. Führung für die Ausgleichsmasse geschaffen. Darüber hinaus kann diese Linearführung besonders kostengünstig produziert bzw. im Motorgehäuse montiert werden. Ein wesentlicher Vorteil liegt darin, dass dadurch ein kompakter Aufbau der Hubkolben-Verbrennungskraftmaschine gewährleistet wird. Wesentlich ist, dass dadurch das Motorgehäuse bzw. das Kurbelwellengehäuse relativ schlank ausgeführt werden kann bzw. relativ schlank bleiben kann. Insbesondere wird die Breite des Kurbelwellengehäuse bzw. des Motorblocks quer zur Längsachse der Kurbelwelle trotz der Ausbildung eines Massenausgleichsystems nicht oder nur unwesentlich erhöht. Die Baubreite dieser Hubkolben-Verbrennungskraftmaschine kann somit relativ schlank gehalten werden, obwohl ein integrierter Massenausgleich ausgebildet ist. Ferner kann dadurch problemlos eine relativ niedrige Hubhöhe für die Ausgleichsmasse umgesetzt werden, wodurch die Bauhöhe der Verbrennungskraftmaschine, das heißt deren parallel zur Oszillationsbewegung der Kolben gemessene Höhe, möglichst niedrig gehalten werden kann.

Durch die Ausgestaltung nach Anspruch 2 kann die Standfestigkeit des Massenausgleichssystems weiter gesteigert werden. Insbesondere kann dadurch eine absolute Wartungsfreiheit während der durchschnittlichen Einsatzdauer der Hubkolben-Verbrennungskraftmaschine bzw. in Bezug auf die üblichen Intervalle für Generalüberholungen erzielt werden. Insbesondere kann durch ausreichend lange Gleitbuchsen in der Ausgleichsmasse übermäßiger Verschleiß bzw. die Gefahr des Verkantens oder Verklemmens der Ausgleichsmasse in Bezug auf die starr befestigten Führungsbolzen minimiert werden.

Durch die Ausgestaltung nach Anspruch 3 wird eine robuste und zugleich langfristig wartungsfreie Bewegungskopplung zwischen der Ausgleichsmasse und dem Kurbeltrieb, insbesondere dessen Ausgleichspleuel geschaffen.

Auch durch die Maßnahmen gemäß Anspruch 4 kann ein möglichst kompaktes bzw. schlank ausgeführtes Kurbelwellengehäuse geschaffen werden, in welchem eine hochwirksame Einrichtung zum Ausgleich von Massenkräften bzw. Massenmomenten untergebracht ist. Insbesondere kann dadurch ohne Vergrößerung des ohnedies erforderlichen Bauraumes für die Rotationsbewegung des Kurbeltriebes für den zumindest einen Motorkolben auch das hochwirksame Massenausgleichssystem untergebracht werden.

Von Vorteil ist auch eine Weiterbildung nach Anspruch 5, da dadurch die Stabilität der Führungselemente deutlich gesteigert werden kann bzw. im Hinblick auf einen möglichst leichtgewichtigen Aufbau außerdem auch eine hohe Führungsgenauigkeit bzw. Führungsstabilität erzielt werden kann. Darüber hinaus kann dadurch das Schwingungsverhalten positiv beeinflusst werden. Insbesondere können dadurch Schwingungsneigungen der Führungselemente bzw. Führungsbolzen gedämpft bzw. hintan gehalten werden.

Von Vorteil sind auch die Maßnahmen gemäß Anspruch 6, da dadurch ein möglichst leichtgewichtiger Aufbau in Bezug auf die Führungselemente für die Ausgleichsmasse geschaffen ist. Dennoch wird dadurch hohen Stabilitätsanforderungen Rechnung getragen, nachdem die hohl ausgeführten Führungselemente ein optimales bzw. günstiges Steifigkeits- und Gewichtsverhältnis aufweisen.

Durch die Weiterbildung gemäß Anspruch 7 kann die gelenkige Lagerung zwischen dem Ausgleichspleuel und der Ausgleichsmasse in einfacher Art und Weise an die Druckumlaufschmierung der Hubkolben-Verbrennungskraftmaschine angeschlossen werden. Zudem wird dadurch die Standfestigkeit bzw. Zuverlässigkeit des Gesamtsystems deutlich erhöht.

Von besonderem Vorteil sind auch die weiterbildenden Maßnahmen nach Anspruch 8, da dadurch zuverlässig bzw. ausreichend geschmierte Führungsbohrungen geschaffen sind, welche einen zuverlässigen bzw. langfristig wartungsfreien Betrieb der Hubkolben-Verbrennungskraftmaschine gewährleisten. Insbesondere kann dadurch während der durchschnittlich auftretenden bzw. während der maximal zu erwartenden Betriebsstunden eine absolute Wartungsfreiheit des Massenausgleichssystems erzielt werden.

Von besonderem Vorteil ist auch die Ausgestaltung nach Anspruch 9, da dadurch ein Schmiermittelkanal bzw. Übertragungsweg für das Schmiermittel aufgebaut ist, mit welchem eine druckbeaufschlagte, zwangsgeführte Förderung des Schmiermittels an die Führungsflächen für die Ausgleichsmasse ermöglicht ist. Insbesondere ist dadurch eine besonders zuverlässige, an die Druckumlaufschmierung anschließbare Schmierölversorgung für die Führungs- bzw. Gleitflächen zwischen der Ausgleichsmasse und dessen Linearführung geschaffen.

Durch die Ausgestaltung gemäß Anspruch 10 wird eine möglichst kompakte Bauform der Hubkolben-Verbrennungskraftmaschine erzielt, insbesondere ein möglichst platzsparender Bauraumbedarf für das Kurbelwellengehäuse bzw. für die untere Abschluss- bzw. Ölwanne schaffen. Darüber hinaus kann ein möglichst kompakter bzw. kleinvolumiger Massenausgleichskörper aufgebaut werden, welcher dennoch eine ausreichend hohe Masse besitzt, um die entsprechende Massenausgleichsfunktion erfüllen zu können. Wesentlich ist, dass eine derart geformte Ausgleichsmasse möglichst platz- bzw. raumsparend in Bezug auf die Gegengewichte zu den Kurbelkröpfungen der Kurbelwelle bzw. in Bezug auf die Lagerschalen für die Hauptlager der Kurbelwelle in der unteren Abschlusswänne bzw. im Kurbelwellengehäuse untergebracht werden kann.

Von Vorteil ist auch eine Ausgestaltung nach Anspruch 11, da dadurch auch bei hochdynamischen bzw. stark belasteten Führungselementen eine ausreichend stabile und zuverlässige Führung für die linear oszillierende Ausgleichsmasse erzielt wird.

Von besonderem Vorteil sind auch die Maßnahmen gemäß Anspruch 12, da dadurch die Kippmomente bzw. jene Momente, die zu einem Verkanten der Ausgleichsmasse gegenüber den Führungselementen führen, eliminiert sind bzw. minimal gehalten werden. Insbesondere wird dadurch ein Verkippen der Ausgleichsmasse bestmöglich vermieden und eine hochzuverlässige Gleitführung zwischen der Ausgleichsmasse und dessen Führungselementen erzielt. Andererseits kann dadurch mit relativ einfachen bzw. relativ kurzen Führungslängen eine besonders funktionszuverlässige und langfristig wartungs- bzw. spielfreie Gleitführung zwischen der linear oszillierenden Ausgleichsmasse und den zugeordneten Führungselementen geschaffen werden.

Zum besseren Verständnis der Erfindung wird diese anhand der nachfolgenden Figuren näher erläutert.

Es zeigen jeweils in stark vereinfachter, schematischer Darstellung:
- Fig. 1: Basiskomponenten einer Hubkolben-Verbrennungskraftmaschine mit einem Mässenausgleichssystem umfassend eine linear geführte Ausgleichsmasse zum Ausgleich von Massenkräften, wobei sich die Ausgleichsmasse im Bereich des unteren Totpunktes befindet;
- Fig. 2: die Hubkolben-Verbrennungskraftmaschine nach Fig. 1 in einem Zustand, in welchem sich die linear oszillierende Ausgleichsmasse im Bereich des oberen Totpunktes befindet;
- Fig. 3: einen Querschnitt durch die Hubkolben-Verbrennungskraftmaschine nach Fig. 2 im Bereich des Massenausgleichssystems;
- Fig. 4: eine Seitenansicht der Hubkolben-Verbrennungskraftmaschine nach Fig. 1 mit mehreren Phantomlinien zur Veranschaulichung der Zusammenhänge interner Komponenten;
- Fig. 5: einige Komponenten des Kurbeltriebes und des Massenausgleichssystems der Hubkolben-Verbrennungskraftmaschine nach Fig. 1 in perspektivischer Darstellung;
- Fig. 6: ein Ausführungsbeispiel der erfindungsgemäßen Hubkolben-Verbrennungskraftmaschine im Längsschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1 oder 5,5 bis 10.

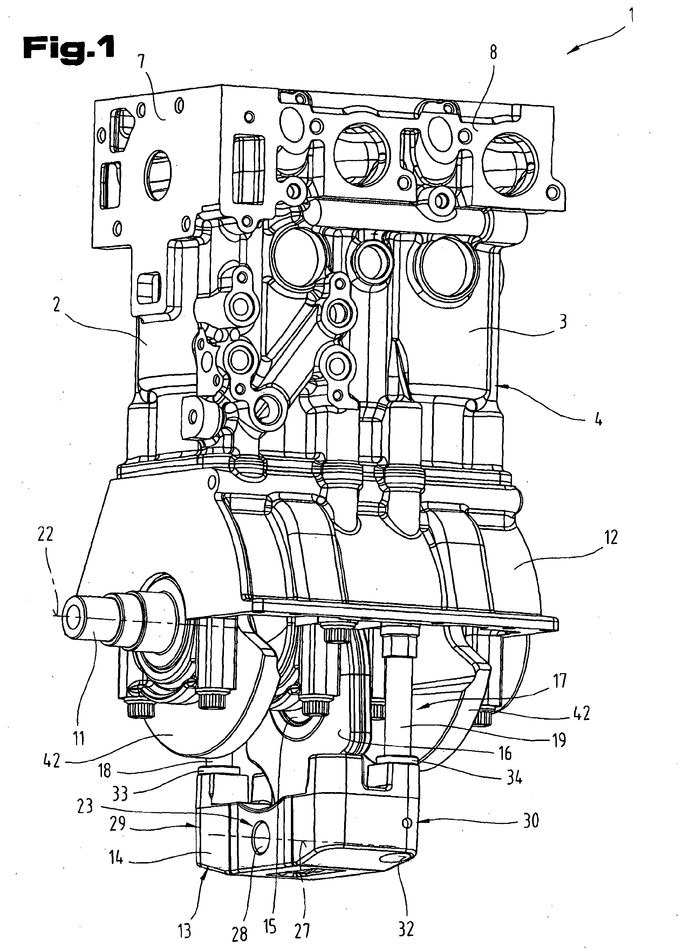

In den Fig. 1 bis 6 sind einige Hauptbestandteile einer erfindungsgemäß ausgebildeten Hubkolben-Verbrennungskraftmaschine 1 beispielhaft veranschaulicht. Wie klar zu erkennen ist, sind diese Abbildungen auf die zur Darstellung der Erfindung wesentlichsten Komponenten, wie sie im Nachfolgenden beschrieben werden, reduziert, um die Übersichtlichkeit zu wahren. Die jeweils zusätzlich erforderlichen, technischen Komponenten für einen kompletten bzw. funktionsfähigen Aufbau der Hubkolben-Verbrennungskraftmaschine 1 liegen im Rahmen des fachmännischen Wissens.

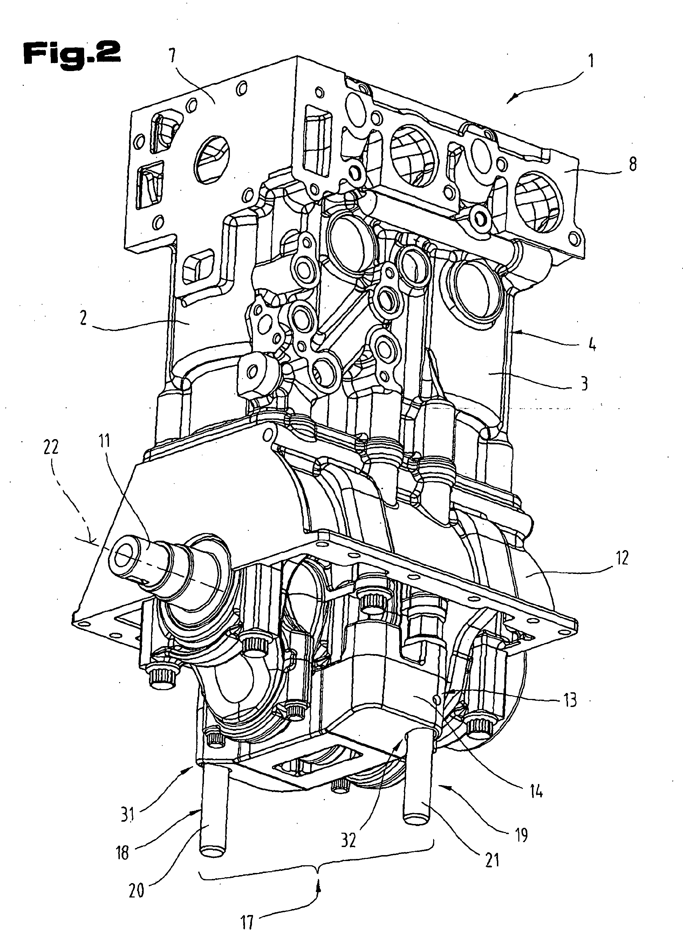

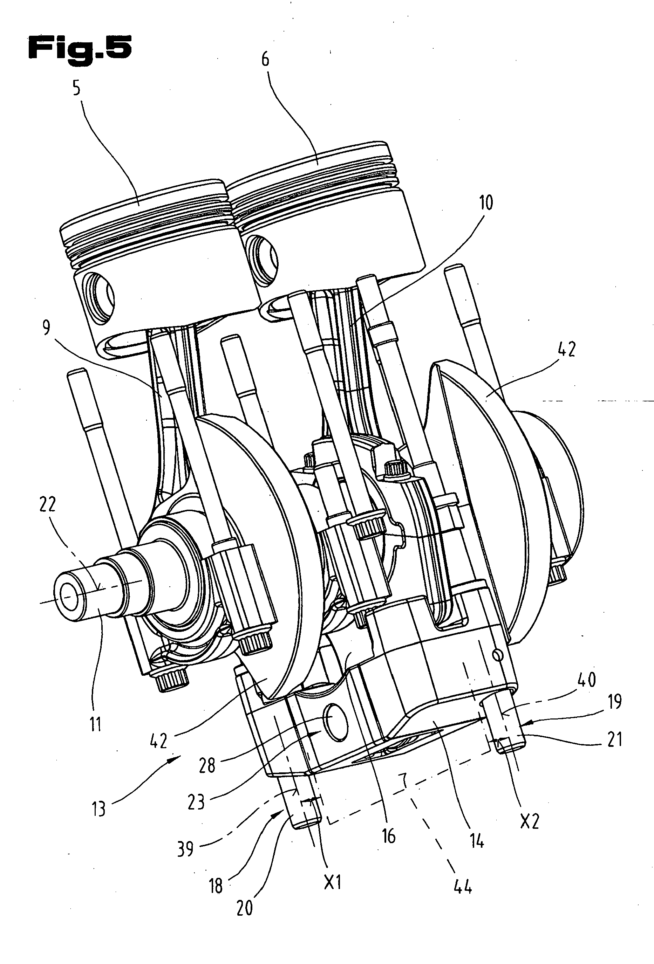

Wie am besten aus den Fig. 1, 2 ersichtlich ist, umfasst eine gattungsgemäße Hubkolben-Verbrennungskraftmaschine wenigstens einen Motorzylinder 2, 3, insbesondere wenigstens einen Zylinderblock 4 mit wenigstens einem darin oszillierenden Motorkolben 5, 6 - Fig. 5. Wie an sich bekannt, ist den jeweiligen Motorzylindern 2, 3 bzw. dem Zylinderblock 4 an der Oberseite wenigstens ein aus dem Stand der Technik bekannter Zylinderkopf 7, 8 zugeordnet. Die jeweiligen Motorkolben 5, 6 sind über Pleuel 9, 10 mit einer Kurbelwelle 11 verbunden und in den Motorzylindern 3, 4 bzw. im Zylinderblock 4 oszillierend geführt. Die Kurbelwelle 11 ist in an sich bekannter Weise in einem Kurbelwellengehäuse 12 drehbar gelagert. Das Kurbelwellengehäuse 12 kann - wie beispielhaft dargestellt - als eigenständiger Bauteil ausgeführt sein, oder als integraler Bestandteil des Zylinderblocks 4 ausgeführt sein.

Die gattungsgemäße Hubkolben-Verbrennungskraftmaschine 1 umfasst weiters wenigstens eine Ausgleichsvorrichtung 13 für eine wenigstens teilweise Kompensation von während des Betriebs der Hubkolben-Verbrennungskraftmaschine 1 auftretenden Massenkräften bzw. Massenmomenten. Diese Ausgleichsvorrichtung 13 umfasst wenigstens eine Ausgleichsmasse 14, welche über eine Kurbelkröpfung 15 und ein Ausgleichspleuel 16 von der Kurbelwelle 11 oszillierend angetrieben bzw. bewegt wird. Die wenigstens eine Ausgleichsmasse 14 der Ausgleichsvorrichtung 13 ist mittels einer der jeweiligen Ausgleichsmasse 14 jeweils zugeordneten Linearführung 17 translatorisch bzw. linear geführt.

Die angegebene Ausgleichsvorrichtung 13 dient der möglichst umfassenden Reduzierung von Vibrationen bzw. Wankneigungen, welche vor allein beim Betrieb von Hubkolben-Verbrennungskraftmaschinen 1 mit geringer Zylinderanzahl entstehen. Die angegebene Ausgleichsvorrichtung 13 ist vor allem bei Hubkolben-Verbrennungskraftmaschinen 1 mit zwei Motorzylindern 2, 3 bzw. bei Hubkolben-Verbrennungskraftmaschinen 1 mit synchron bzw. gleichphasig bewegten Motorkolben 5, 6 besonders zweckmäßig.

Wesentlich ist, dass die Linearführung 17 für die oszillierend, insbesondere gegengleich zu dem Motorkolben 5, 6 bewegte Ausgleichsmasse 14 durch zumindest zwei zueinander beabstandete Führungselemente 18, 19 gebildet ist. Bevorzugt sind die zueinander distanzierten Führungselemente 18, 19 für die Ausgleichsmasse 14 durch baulich eigenständig ausgeführte Führüngsorgane gebildet. Entsprechend einer zweckmäßigen Ausgestaltung sind die zueinander distanzierten Führungselemente 18, 19 durch mit dem Motorgehäuse, insbesondere mit dem Kurbelwellengehäuse 12 fest verbundene Führungsbolzen 20, 21 gebildet. Diese Führungsbolzen 20, 21 können dabei in Art von sogenannten Stehbolzen ausgeführt sein, welche parallel zur Zylinderlauffläche bzw. parallel zur Bewegungsrichtung der Motorkolben 5, 6 ausgerichtet sind und im Vergleich zu den Motorkolben 5, 6 auf der in Bezug zur Kurbelwelle 11 gegenüberliegenden Seite der Kurbelwelte 11 angeordnet sind.

Die Führungsbolzen 20, 21 für die Ausgleichsmasse 14 können dabei zweckmäßigerweise einen kreisrunden Querschnitt aufweisen, wie dies den Fig. 1, 2 zu entnehmen ist. Alternativ ist es aber auch denkbar, die Führungselemente 18, 19 mit einem eckigen, insbesondere rechteckigen oder quadratischen Querschnitt auszuführen, um beispielsweise Biegekräfte bzw. auf die Führungselemente 18, 19 einwirkende elastische Verformungsbewegungen besser aufnehmen zu können bzw. diesen Biegebeanspruchungen in der Hauptbelastungsrichtung erhöhten Widerstand entgegen setzen zu können.

Ebenso ist es möglich, die Führungselemente 18, 19 hohl auszuführen, insbesondere als Hohlwellen oder als im Querschnitt mehreckige Hohlprofile auszubilden. Demnach können die Führungselemente 18, 19, insbesondere die Führungsbolzen 20, 21 als Hohlkörper, insbesondere als Hohlzylinder ausgeführt sein. Dadurch wird ein optimiertes Verhältnis zwischen der Stabilität bzw. Steifigkeit der Linearführung 17 und der Masse der Linearführung 17, insbesondere in Bezug auf deren Führungselemente 18, 19 erzielt.

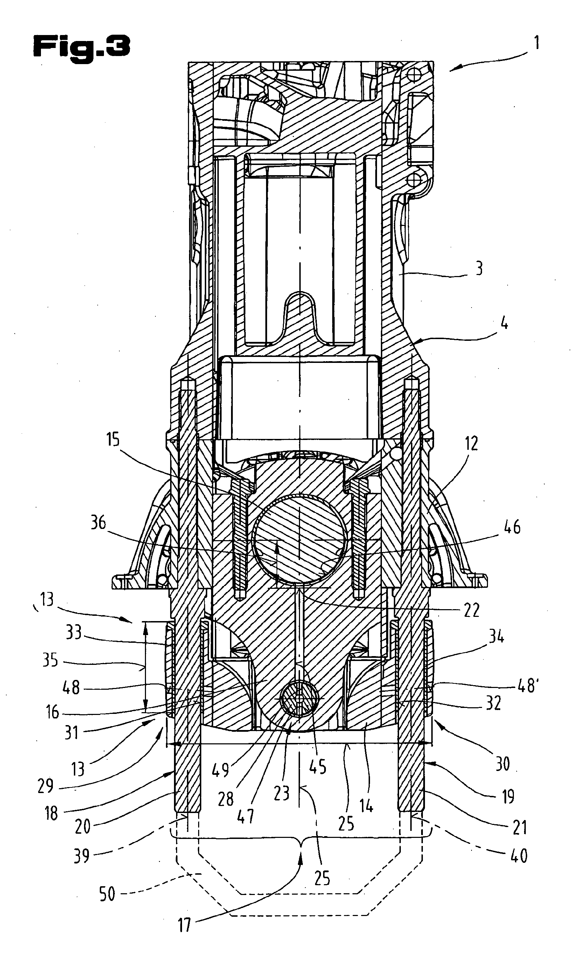

Die Führungselemente 18, 19 für die oszillierende Ausgleichsmasse 14 sind vorzugsweise starr mit dem Kurbelwellengehäuse 12 verbunden, insbesondere in dieses eingepresst oder eingeschraubt. Entsprechend einer vorteilhaften Ausgestaltung, wie sie in Fig. 3 veranschaulicht ist, sind die Führungselemente 18, 19 zugleich als Verbindungselemente ausgeführt, welche das Kurbelwellengehäuse 12 und den wenigstens einen Zylinderblock 4 fest miteinander verbinden bzw. einzelne Motorzylinder 2, 3 mit dem Kurbelwellengehäuse 12 verbinden, insbesondere miteinander verschrauben. Dabei sind die vom Führungsabschnitt abgewandten Endabschnitte der Führungselemente 18, 19 als Schraubmittel ausgeführt, insbesondere mit wenigstens einem Gewindeabschnitt versehen. Dadurch kann die Anzahl der erforderlichen Komponenten reduziert werden und ein möglichst kostengünstiger Aufbau erzielt bzw. eine relativ kostengünstige Lagerbestandsverwaltung und Ersatzteilversorgung erreicht werden. Zweckmäßigerweise sind zusätzliche Schraubmittel zur Verbindung der genannten Motorkomponenten vorgesehen. Zumindest einzelne dieser Schraubmittel sind vorzugsweise durch die Befestigungsschrauben für die Lagerschalen der Hauptlager der Kurbelwelle 11 gebildet, wie dies am besten aus Fig. 5 ersichtlich ist.

Die Kurbelkröpfung 15, welche in Bezug auf die Kurbelwellenachse 22 gegenüberliegend zu den Kurbelkröpfungen für die Motorkolben 5, 6 ausgerichtet ist, ist über das Ausgleichspleuel 16 mit der Ausgleichsmasse 14 bewegungsverbunden. Die Kurbelkröpfung 15 bzw. die Ausgleichsmasse 14 ist in Bezug auf die Kurbelwellenachse 22 der Kurbelwelle 11 vorzugsweise im Mittel zwischen den Kurbelkröpfungen für die Pleuel 9, 10 der Motorkolben 5, 6 angeordnet. Insbesondere bei einer geradzahligen Zylinderanzahl ist die Ausgleichsmasse 14 im Mittel zwischen den äußersten Kurbelkröpfungen für die Motorkolben 5, 6 angeordnet. Dadurch werden Massenmomente, welche zu einem Wanken bzw. zu Kippbewegungen der Hubkolben-Verbrennungskraftmaschine 1 führen würden, vermieden.

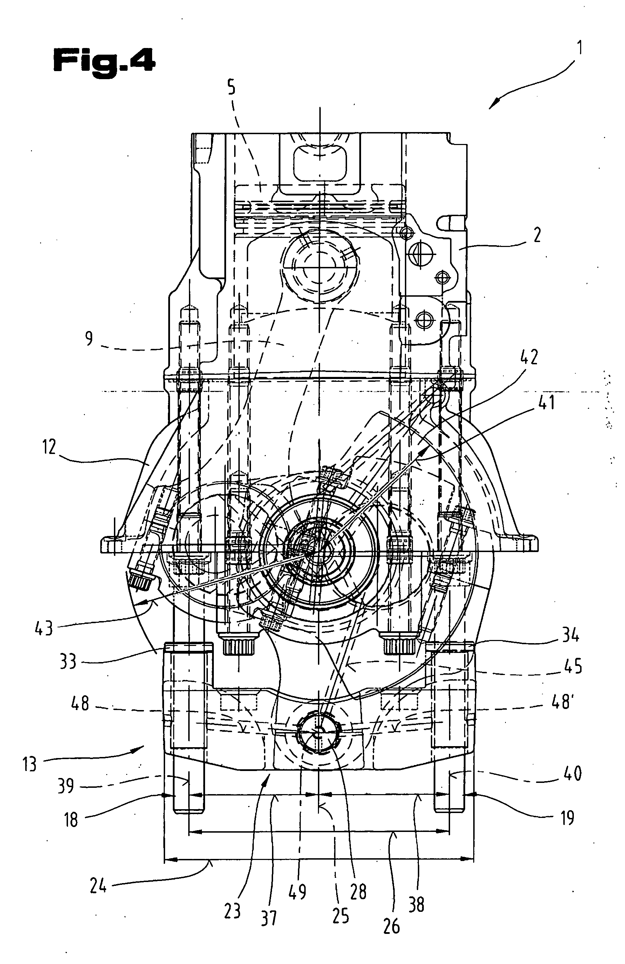

Zweckmäßig ist es dabei, das von der Kurbelkröpfung 15 abgewandte Ende des Ausgleichspleuels 16 derart mit der Ausgleichsmasse 14 zu verbinden, dass in einem mittleren Abschnitt zwischen den beiden zueinander distanzierten Führungselementen 18, 19 eine Lagerung 23 zur gelenkigen Verbindung mit dem Ausgleichspleuel 16 ausgebildet ist. Insbesondere dann, wenn die Ausgleichsmasse 14 eine symmetrische Gewichts- bzw. Masseverteilung in Bezug auf dessen Längserstreckung 24 - Fig. 4 - aufweist, ist es vorteilhaft, die gelenkige Verbindung bzw. Lagerung 23 zwischen dem Ausgleichspleuel 16 und der Ausgleichsmasse 14 in der Mitte der Längserstreckung 24, insbesondere möglichst nahe einer sogenannten Massen-Symmetrieebene 25 anzuordnen. Zweckmäßigerweise stellt die Massen-Symmetrieebene 25 auch eine Halbierende eines Abstandes 26 zwischen den zueinander distanzierten, die Linearführung 17 bildenden Führungselementen 18, 19 dar.

Besonders zweckmäßig ist es, wenn die Achse 27 eines Verbindungsbolzens 28 zwischen der Ausgleichsmasse 14 und dem Ausgleichspleuel 16 auf dem oder möglichst nahe zum Schwerpunkt, insbesondere Massenschwerpunkt, der Ausgleichsmasse 14 liegt. Durch die vorgenannten Maßnahmen kann ein Kippmoment der oszillierenden Ausgleichsmasse 14 gegenüber den Führungselementen 18, 19 vermieden bzw. hintan gehalten oder stark reduziert werden, sodass gegenseitigen Belastungen, insbesondere Reibungen oder Verkantungstendenzen, minimiert sind. Die gelenkige Lagerung 23 zwischen dem Ausgleichspleuel 16 und der linear oszillierenden Ausgleichsmasse 14 umfasst vorzugsweise eine Bolzenverbindung, insbesondere einen Verbindungsbolzen 28, dessen Bolzenachse 27 - Fig. 1 - parallel zur Kurbelwellenachse 22 verläuft.

In den distalen Endabschnitten 29, 30 der Ausgleichsmasse 14 - bezugnehmend auf eine Erstreckung quer zur Kurbelwellenachse 22 - sind mit den Führungselementen 18, 19, insbesondere mit den Führungsbolzen 20, 21 zusammenwirkende Führungsbohrungen 31, 32 ausgebildet. Diese Führungsbohrungen 31, 32 sind bevorzugt als Durchgangsbohrungen in der Ausgleichsmasse 14 ausgeführt. Dadurch werden Stau- bzw. Dämpfungswirkungen zwischen den Führungselementen 18, 19 und der darauf gleitenden bzw. geführten Ausgleichsmasse 14 bzw. gegenüber dessen Führungsbohrungen 31, 32 vermieden. Insbesondere kann ein ungehinderter Durchtritt von Schmiermittel über die durchgängig ausgeführten Führungsbohrungen 31, 32 erfolgen, sodass ein ungehemmtes Gleitverhalten der Ausgleichsmasse 14 in Bezug auf die stiftartigen Führungselemente 18, 19 gewährleistet ist. Insbesondere kann dadurch eine problemlose Unterbringung der Linearführung 17 bzw. der Ausgleichsmasse 14 im Kurbelwellengehäuse 12 bzw. innerhalb der Ölwanne der Hubkolben-Verbrennungskraftmaschine 1 erfolgen.

Zur Minimierung der Gleitreibung und zur Erzielung eines möglichst verschleißfreien, langfristig wartungsfreien bzw. funktionszuverlässigen Betriebs der Linearführung 17 sind die Führungsbohrungen 31, 32 bevorzugt durch Gleitbuchsen 33, 34 gebildet. Diese Gleitbuchsen 33, 34 sind in Aufnahmebohrungen der Ausgleichsmasse 14 befestigt, beispielsweise eingepresst oder eingeschraubt. Diese Gleitbuchsen 33, 34 sind in zweckmäßiger Weise aus einem metallischen Werkstoff gebildet, welcher gute Gleiteigenschaften gegenüber den bevorzugt metallischen Führungselemente 18, 19 aufweist und dabei geringem Verschleiß unterliegt. Die Gleitbuchsen 33, 34 in der Ausgleichsmasse 14 können durch aus dem Stand der Technik bekannte Gleitlager-Werkstoffe gebildet sein.

Eine Führungslänge 35 der Gleitbuchsen 33, 34 gegenüber den starr bzw. unbeweglich am Motorgehäuse befestigten Führungsbolzen 20, 21 ist möglichst groß gewählt, um jene Momente bzw. Flächenpressungen zu minimieren, die zu einem Verkanten bzw. zu kleinflächiger Reibung der Ausgleichsmasse 14 gegenüber der Linearführung 17 führen. Entsprechend einer zweckmäßigen und praktikablen Ausgestaltung entspricht die Führungslänge 35 in etwa einem Kurbelradius 36 - Fig. 3 - der Kurbelkröpfung 15 für das Ausgleichspleuel 16. Zweckmäßig ist es, wenn die Führungslänge 35 zwischen 70 % bis 140 % des Kurbelradius 36 der Kurbelkröpfung 15 beträgt. Der Kurbelradius 36 der Kurbelkröpfung 15 bezieht sich dabei auf den radialen Abstand der Zentrumsachse der Kurbelkröpfung 15 bzw. dessen Kurbelzapfen gegenüber der Kurbelwellenachse 22, wie dies am Besten aus Fig. 3 ersichtlich ist.

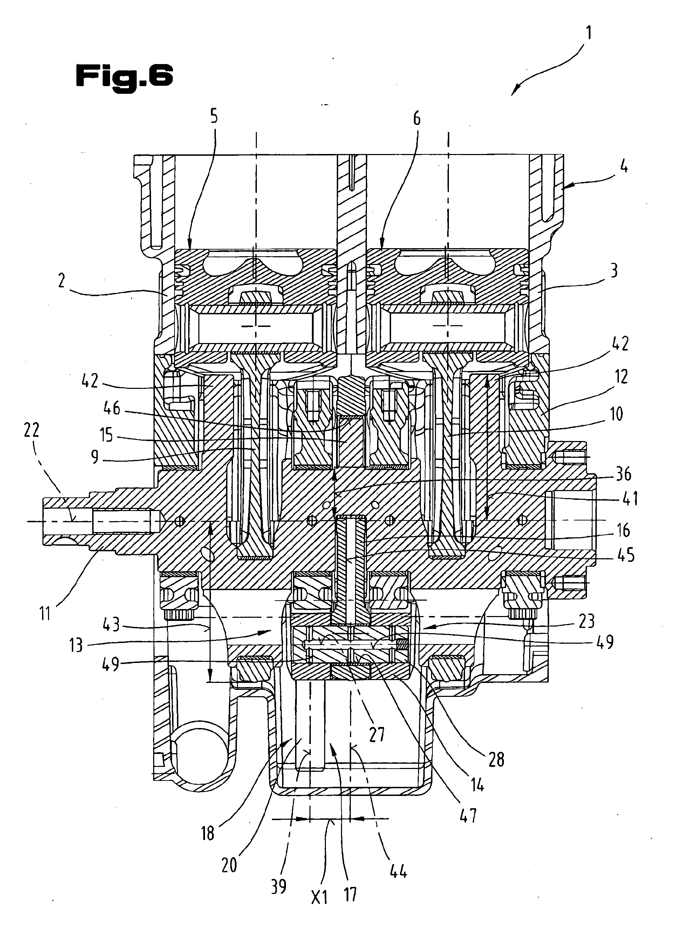

Entsprechend einer zweckmäßigen Ausgestaltung, wie sie am besten aus Fig. 4 ersichtlich ist, sind die vorzugsweise bolzenartigen Führungselemente 18, 19 in radialen Abständen 37, 38 zur Kurbelwellenachse 22 angeordnet. Insbesondere sind die Führungselemente 18, 19 in einem einheitlichen, radialen Abstand 37, 38 beiderseits der Kurbelwellenachse 22 positioniert. Dabei ist ein radialer Abstand 37, 38 zwischen der Führungs- bzw. Längsachse 39, 40 von zumindest einem der Führungsbolzen 20, 21 und der Kurbelwellenachse 22 kleiner bemessen, als ein maximaler Rotationsradius 41 - Fig. 5 - des oder der Gegengewichte 42 zu den Kurbelwellenkröpfungen für die Motorkolben 5, 6. Alternativ oder in Kombination dazu ist der kürzeste radiale Abstand 37, 38 zwischen der Führungs- bzw. Längsachse 39, 40 der Führungsbolzen 20, 21 und der Kurbelwellenachse 22 kleiner bemessen, als der größte Rotationsradius 43 - Fig. 4 - der Kurbeltriebe für die Motorkolben 5, 6 des Hubkolbenmotors. Insbesondere sind Führungs- bzw. Längsachsen 39, 40 der bevorzugt zumindest paarweise ausgebildeten Führungselemente 18, 19 in einem kleineren, radialen Abstand zur Kurbelwellenachse 22 positioniert, als der maximale Rotationsradius 41 - Fig. 5, 6 - der Gegengewichte 42 bzw. der größte Rotationsradius 43 - Fig. 4, 6 - der Kurbeltriebe beträgt. Der größte Rotationsradius 43 der Kurbeltriebe für den oder die Motorkolben 5, 6 ist üblicherweise durch die Lagerschalen bzw. durch die Schraubenköpfe für die Lagerschalen des Pleuellagers gebildet, wie dies am besten aus den Fig. 4, 6 ersichtlich ist. Dadurch wird ein möglichst kompakter Aufbau erzielt bzw. wird dadurch ein möglichst schlankes Kurbelwellengehäuse 12 gewährleistet.

Möglichst kompakte bzw. schmale Abmessungen der Hubkolben-Verbrennungskraftmaschine 1 bzw. ihres Kurbelwellengehäuses 12 werden auch durch eine Beabstandung der Elemente des Paares von Führungselementen 18, 19 in axialer Richtung zur Kurbelwellenachse 22 erzielt, wie dies am besten aus Fig. 5, 6 ersichtlich ist. Insbesondere sind die Führungselemente 18, 19 in einem axialen Abstand X1, X2 vor und nach einer Längsmittelebene 44 bzw. Teilungsebene des Ausgleichspleuels 16 angeordnet. Das heißt, dass die beidseits der Kurbelwellenachse 22 positionierten Führungselemente 18, 19 in Bezug auf die Axialrichtung der Kurbelwelle 11 bzw. in Bezug auf die Kurbelwellenachse 22 versetzt bzw. zueinander distanziert angeordnet sind. Dadurch ist es möglich, das Ausgleichspleuel 16 per se relativ voluminös bzw. breit und schwer auszuführen und einen Teil der als Ausgleichsmasse 14 fungierenden Masse dem Ausgleichspleuel 16 zuzuordnen bzw. auf das Ausgleichspleuel 16 zu übertragen. Demnach kann bereits das Ausgleichspleuel 16 Massenausgleichsfunktionen übernehmen und demgemäß im Vergleich zu den Pleueln 9, 10 für die Motorkolben 5, 6 relativ voluminös bzw. schwergewichtig ausgeführt sein, wie dies am besten aus Fig. 5 ersichtlich ist. Insbesondere kann auch eine große, radiale Erstreckung des Ausgleichspleuels 16 in zweckmäßiger Art und Weise vorgesehen sein, wodurch das Ausgleichspleuel 16 auch in dem der Ausgleichsmasse 14 nächstliegenden Abschnitten, insbesondere im Endabschnitt mit der Lagerung 23, relativ voluminös und relativ schwergewichtig ausgebildet ist. Trotz der voluminösen Ausführung des Ausgleichspleuels 16 kann der Hubkolben-Verbrennungskraftmaschine 1 im Bereich des Kurbelwellengehäuses 12 relativ schlank ausgeführt werden, wenn die paarweise angeordneten, beidseits der Kurbelwellenachse 22 angeordneten Führungselemente 18, 19 auch in axialer Richtung der Kurbelwellenachse 22 zueinander distanziert ausgebildet sind bzw. in Bezug auf eine Längsmittelebene 44 des Ausgleichspleuels 16 in axialer Richtung der Kurbelwellenachse 22 vor und hinter dem Ausgleichspleuel 16 positioniert sind. Mit anderen Worten ausgedrückt ist also das Ausgleichspleuel 16 zwischen den in axialer Richtung der Kurbelwellenachse 22 zueinander distanzierten, einander gegenüberliegenden Führungselementen 18, 19 bzw. zwischen den demgemäßen Führungsbolzen 20, 21 angeordnet, wie dies am besten aus Fig. 5, 6 ersichtlich ist. Damit sind relativ kompakte Abmessungen der Hubkolben-Verbrennungskraftmaschine 1 mit einer hochwirksamen Ausgleichsvorrichtung 13 zum Ausgleich von Massenkräften bzw. Massenmomenten vereinbar. Bezugnehmend auf einen in Draufsicht annähernd rechteckigen Körper zur Bildung der Ausgleichsmasse 14 sind dabei die Führungselemente 18, 19 bzw. die damit korrespondierenden Führungsbohrungen 31, 32 in diagonal zueinander liegenden Eckpunkten der Ausgleichsmasse 14 ausgebildet, wie dies am besten den Fig. 2, 5 zu entnehmen ist. Das im Vergleich zu den Pleueln 9, 10 für die Motorkolben 5, 6 relativ voluminöse Ausgleichspleuel 16 bewegt sich somit im Zwischenraum zwischen den in Axialrichtung der Kurbelwelle 11 zueinander distanzierten Führungselementen 18, 19 für die Ausgleichsmasse 14.

Nachdem das Ausgleichspleuel 16 vor allem in dem der gelenkigen Lagerung 23 für die Ausgleichsmasse 14 nächstliegenden Endabschnitt möglichst voluminös bzw. schwer ausgeführt werden kann, fungiert vor allem dieser Endabschnitt des Ausgleichspleuels 16 auch als Ausgleichsmasse bzw. kann ein Teil der Masse des Ausgleichspleuels 16 der Masse der Ausgleichsmasse 14 hinzugerechnet werden.

Entsprechend einer zweckmäßigen Ausgestaltung ist im Ausgleichspleuel 16 wenigstens ein Schmiermittelkanal 45 ausgebildet, welcher das erste und zweite Pleuelauge 46, 47 miteinander verbindet. Dieser Schmiermittelkanal 45 im Ausgleichspleuel 16 ist zur Übertragung von bevorzugt druckbeaufschlagtem, fluidischem Schmiermittel ausgehend vom ersten Pleuelauge 46 zum zweiten Pleuelauge 47 vorgesehen. Das erste Pleuelauge 46 ist dabei im sogenannten Pleuelfuß ausgebildet, welcher mit der Kurbelkröpfung 15 der Kurbelwelle 11 verbunden ist. Das zweite, vergleichsweise kleinere Pleuelauge 47 steht über den Verbindungsbolzen 28 mit der Ausgleichsmasse 14 in gelenkiger Verbindung. Dadurch wird das über eine nicht dargestellte Schmierölpumpe in das erste Pleuelauge 46 geförderte Schmiermittel über den Schmiermittelkanal 45 der gelenkigen Lagerung 23 zwischen dem zweiten Pleuelauge 47 und der Ausgleichsmasse 14 zugeführt, wodurch eine hoch beanspruchbare und langfristig wartungsfreie gelenkige Lagerung 23 geschaffen wird. Der Schmiermittelkanal 45 verläuft dabei bevorzugt innerhalb des sogenannten Pleuelschaftes, beispielsweise entlang der Längsmittelachse des Ausgleichspleuels 16, und stellt eine strömungstechnische Verbindung zwischen dem ersten und zweiten Pleuelauge 46, 47, insbesondere zwischen dessen Lagerstellen dar.

Entsprechend einer zweckmäßigen Weiterbildung ist ausgehend von der gelenkigen Lagerung 23 zwischen der Ausgleichsmasse 14 und dem Ausgleichspleuel 16 zumindest ein weiterer, insbesondere wenigstens ein zweiter Schmiermittelkanal 48, 48' zur intensiven bzw. zwingenden Versorgung der Linearführung 17 mit Schmiermittel ausgebildet. Insbesondere ist ausgehend von der gelenkigen Lagerung 23 an der Ausgleichsmasse 14 zumindest jeweils wenigstens ein zu den Führungsbohrungen 31, 32 respektive zu den Gleitbuchsen 33, 34 verlaufender, zweiter Schmiermittelkanal 48, 48' ausgebildet, wie dies am besten aus Fig. 4 ersichtlich ist. Demnach ist beim gezeigten Ausführungsbeispiel ausgehend von der gelenkigen Lagerung 23 zwischen dem Ausgleichspleuel 16 und der Ausgleichsmasse 14 zu jedem der Führungselemente 18, 19, insbesondere zu jeder damit korrespondierenden Führungsbohrung 31, 32, jeweils wenigstens ein Schmiermittelkanal 48, 48' ausgebildet, welcher zur druckbeaufschlagten Zuführung von Schmiermittel zur Linearführung 17, insbesondere zu den Führungsbohrungen 31, 32 bzw. zu den darin eingesetzten Gleitbuchsen 33, 34 vorgesehen ist. Dadurch wird eine zuverlässige, insbesondere plangemäße bzw. zwingende und ausreichende Schmierung der Linearführung 17 sichergestellt. Ferner wird dadurch erreicht, dass die entsprechende Ausgleichsvorrichtung 13 mit der linear bewegten Ausgleichsmasse 14 besonders funktionszuverlässig ist und ein möglichst langfristig wartungsfreier Betrieb der Hubkolben-Verbrennungskraftmaschine 1 erzielbar ist.

Der Verlauf von druckbeaufschlagtem Schmiermittel zur Linearführung 17 stellt sich somit folgendermaßen dar: Ausgehend von der Kurbelwelle 11 wird das Schmiermittel über das erste Pleuelauge 46 und über den Schmiermittelkanal 45 im Ausgleichspleuel 16 zum zweiten Pleuelauge 47 gefördert und kann dort anteilig zur Schmierung der gelenkigen Verbindung 23 genutzt werden. Im Pleuelauge 46, insbesondere über das Innere des Verbindungsbolzens 28, wird ein Teil des zugeführten Schmiermittels in die weiteren Schmiermittelkanäle 48, 48' geleitet und in weiterer Folge der Linearführung 17, insbesondere den Führungsbohrungen 31, 32 in der Ausgleichsmasse 14 sowie den Mantelabschnitten der Führungselemente 18, 19 gezielt zugeführt.

Zur zuverlässigen bzw. ausreichenden Versorgung der Linearführung 17 mit Schmiermittel ist es zweckmäßig, den ersten Schmiermittelkanal 45 und den zumindest einen zweiten Schmiermittelkanal 48, 48' durch wenigstens einen im Verbindungsbolzen 28 der gelenkigen Lagerung 23 verlaufenden Verbindungskanal 49 strömungstechnisch zu verbinden, wie dies am besten aus Fig. 4, 6 ersichtlich ist. Dadurch wird eine gezielte Überleitung von druckbeaufschlagtem Schmiermittel ausgehend vom ersten Schmiermittelkanal 45 in den wenigstens einfach ausgebildeten, zweiten Schmiermittelkanal 48, 48' erzielt. Der entsprechende Verbindungskanal 49 im Verbindungsbolzen 28 verläuft dabei in axialer und radialer Richtung zu seiner Bolzenachse 27. Der zumindest eine Schmiermittelkanal 48, 48' verläuft bevorzugt innerhalb der Ausgleichsmasse 14 und erstreckt sich zwischen der gelenkigen Lagerung 23 und den zumindest zweifach ausgeführten Führungselementen 18, 19 bzw. Führungsbohrungen 31, 32, wie dies am besten aus Fig. 4 ersichtlich ist.

Anstelle des zeichnerisch dargestellten Paares von Führungselementen 18, 19 für die Ausgleichsmasse 14, welche Führungselemente 18, 19 beiderseits der Kurbelwellenachse 22 angeordnet sind, ist es auch möglich, mehr als zwei Führungselemente 18, 19 vorzusehen. Zweckmäßigerweise besitzt die Ausgleichsmasse 14 in Ansicht parallel zur Führungsrichtung der Führungselemente 18, 19 eine annährend rechteckige Umrisskontur. Dabei kann jedem Eckbereich der in Draufsicht im Wesentlichen rechteckförmigen Ausgleichsmasse 14 jeweils ein Führungselement 18, 18' und 19, 19' zugeordnet sein - nicht dargestellt. Durch diese Mehr- bzw. Vierfach-Anordnung in den Eckbereichen der Ausgleichsmasse 14 kann auch bei erhöhten Belastungen der Linearführung 17 quer zu dessen Führungsrichtung eine langfristig zuverlässige bzw. dauerfeste Linearführung 17 für die Ausgleichsmasse 14 geschaffen werden.

Eine vorteilhafte Formgebung für die Ausgleichsmasse 14 liegt vor, wenn der bevorzugt metallische Körper für die Ausgleichsmasse 14 in Ansicht parallel zur Führungsrichtung der Führungselemente 18, 19 eine annährend rechteckige Umrisskontur besitzt und in Ansicht parallel zur Kurbelwellenachse 22 eine annährend bogen- oder sichelförmige Umrisskontur aufweist, wie dies vor allem aus einer Zusammenschau der Fig. 4, 5 einfach ersichtlich ist. Dadurch wird eine optimale Raumausnutzung bzw. ein kompakter Aufbau der Hubkolben-Verbrennungskraftmaschine 1 erzielt. Zudem wird ein möglichst optimales Verhältnis zwischen Bauraumbedarf und Masse der Ausgleichsmasse 14, insbesondere ein gutes Verhältnis zwischen Bauvolumen und wirksamer Masse bzw. Effektivmasse der Ausgleichsmasse 14 erzielt.

Um die Stabilität bzw. Maßhaltigkeit der Linearführung 17 zu steigern, ist es auch möglich, die bevorzugt zumindest paarweise ausgebildeten oder vierfach angeordenten Führungselemente 18, 19 an ihrem vom Motorgehäuse bzw. vom Kurbelwellengehäuse 12 abgewandten, freien Ende über zumindest eine Verbindungsstrebe 50 fest miteinander zu verbinden. Durch diese optionale Weiterbildung wird eine erhöhte Stabilität bzw. Maßhaltigkeit der vom Kurbelwellengehäuse 12 zapfenartig vorkragenden Führungselemente 18, 19, insbesondere der entsprechenden Führungsbolzen 20, 21 erzielt. Eine entsprechend ausgebildete Verbindungsstrebe 50 erhöht dabei die Bauhöhe der Hubkolben-Verbrennungskraftmaschine 1 geringfügig, wie dies in Fig. 3 schematisch angedeutet wurde.

Die Ausführungsbeispiele zeigen mögliche Ausführungsvarianten der Hubkolben-Verbrennungskraftmaschine 1 bzw. der Ausgleichsvorrichtung 13, wobei an dieser Stelle bemerkt sei, dass die Erfindung nicht auf die speziell dargestellte Ausführungsvariante eingeschränkt ist. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Hubkolben-Verbrennungskraftmaschine 1 bzw. der Ausgleichsvorrichtung 13 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Hubkolben- | 41 | Rotationsradius |
| | Verbrennungskraftmaschine | 42 | Gegengewicht |
| 2 | Motorzylinder | 43 | Rotationsradius |
| 3 | Motorzylinder | 44 | Längsmittelebene |
| 4 | Zylinderblock | 45 | Schmiermittelkanal |
| 5 | Motorkolben | | |
| | | 46 | Pleuelauge |
| 6 | Motorkolben | 47 | Pleuelauge |
| 7 | Zylinderkopf | 48, 48' | Schmiermittelkanal |
| 8 | Zylinderkopf | 49 | Verbindungskanal |
| 9 | Pleuel | 50 | Verbindungsstrebe |
| 10 | Pleuel | | |
| | | X1, X2 | Abstand (axial) |
| 11 | Kurbelwelle | | |
| 12 | Kurbelwellengehäuse | | |
| 13 | Ausgleichsvorrichtung | | |
| 14 | Ausgleichsmasse | | |
| 15 | Kurbelkröpfung | | |
| | | | |
| 16 | Ausgleichspleuel | | |
| 17 | Linearführung | | |
| 18 | Führungselement | | |
| 19 | Führungselement | | |
| 20 | Führungsbolzen | | |
| | | | |
| 21 | Führungsbolzen | | |
| 22 | Kurbelwellenachse | | |
| 23 | Lagerung | | |
| 24 | Längserstreckung | | |
| 25 | Massen-Symmetrieebene | | |
| | | | |
| 26 | Abstand | | |
| 27 | Bolzenachse | | |
| 28 | Verbindungsbolzen | | |
| 29 | Endabschnitt | | |
| 30 | Endabschnitt | | |
| | | | |
| 31 | Führungsbohrung | | |
| 32 | Führungsbohrung | | |
| 33 | Gleitbuchse | | |
| 34 | Gleitbuchse | | |
| 35 | Führungslänge | | |
| | | | |
| 36 | Kurbelradius | | |
| 37 | Abstand | | |
| 38 | Abstand | | |
| 39 | Führungs- bzw. Längsachse | | |
| 40 | Führungs- bzw. Längsachse | | |

## Patentansprüche

1. Hubkolben-Verbrennungskraftmaschine (1) mit wenigstens einem Motorzylinder (2,3) und wenigstens einem darin oszillierenden Motorkolben (5,6), und mit wenigstens einer über eine Kurbelkröpfung (15) und ein Ausgleichspleuel (16) von einer Kurbelwelle (11) oszillierend angetriebenen Ausgleichsmasse (14), welche mittels einer der jeweiligen Ausgleichsmasse (14) jeweils zugeordneten Linearführung (17) translatorisch geführt ist, wobei an der Ausgleichsmasse (14) in einem mittleren Abschnitt eine Lagerung (23) zur gelenkigen Verbindung mit dem Ausgleichspleuel (16) ausgebildet ist, **dadurch gekennzeichnet, dass** zumindest zwei zueinander beabstandete Führungselemente (18, 19), welche durch mit dem Motorgehäuse fest verbundene Führungsbolzen (20, 21) gebildet sind, die Linearführung (17) für die Ausgleichsmasse (14) ausbilden, und dass in den distalen Endabschnitten der Ausgleichsmasse (14) mit den Führungsbolzen (20,21) zusammenwirkende Führungsbohrungen (31, 32) ausgebildet sind, wobei die Führungselemente (18, 19) in einem radialen Abstand (37, 38) beiderseits der Kurbelwellenachse (22) positioniert sind und in axialer Richtung zur Kurbelwellenachse (22) zueinander beabstandet angeordnet sind, und die Lagerung zur gelenkigen Verbindung an der Ausgleichsmasse zwischen den beiden zueinander distanzierten Führungselementen (18, 19) liegt.

2. Hubkolben-Verbrennungskraftmaschine nach Anspruch 1, **dadurch gekennzeichnet, dass** die Führungsbohrungen (31, 32) durch in Aufnahmebohrungen der Ausgleichsmasse (14) befestigte Gleitbuchsen (33, 34) gebildet sind.

3. Hubkolben-Verbrennungskraftmaschine nach Anspruch 1, **dadurch gekennzeichnet, dass** die gelenkige Lagerung (23) zwischen dem Ausgleichspleuel (16) und der Ausgleichsmasse (14) einen Verbindungsbolzen (28) umfasst, dessen Bolzenachse (27) parallel zur Kurbelwellenachse (22) verläuft.

4. Hubkolben-Verbrennungskraftmaschine nach Anspruch 1, **dadurch gekennzeichnet, dass** ein radialer Abstand (37, 38) zwischen der Führungs- bzw. Längsachse (39, 40) eines Führungsbolzens (20, 21) und der Kurbelwellenachse (22) kleiner bemessen ist als ein maximaler Rotationsradius (41) der Gegengewichte (42) zu den Kurbelwellenkröpfungen, oder kleiner bemessen ist als der größte Rotationsradius (43) der Kurbeltriebe für die Motorkolben (5, 6) des Hubkolbenmotors.

5. Hubkolben-Verbrennungskraftmaschine nach Anspruch 1, **dadurch gekennzeichnet, dass** die Führungselemente (18, 19) an ihrem vom Motorgehäuse abgewandten Ende über eine Verbindungsstrebe (50) fest miteinander verbunden sind.

6. Hubkolben-Verbrennungskraftmaschine nach Anspruch 1, **dadurch gekennzeichnet, dass** die Führungsbolzen (20,21) als Hohlkörper, insbesondere als Hohlzylinder ausgeführt sind.

7. Hubkolben-Verbrennungskraftmaschine nach Anspruch 1, **dadurch gekennzeichnet, dass** im Ausgleichspleuel (16) wenigstens ein das erste und zweite Pleuelauge (46, 47) verbindender, erster Schmiermittelkanal (45) ausgebildet ist, welcher zur Versorgung der gelenkigen Lagerung (23) an der Ausgleichsmasse (14) mit Schmiermittel vorgesehen ist.

8. Hubkolben-Verbrennungskraftmaschine nach Anspruch 1, **dadurch gekennzeichnet, dass** ausgehend von der gelenkigen Lagerung (23) an der Ausgleichsmasse (14) zumindest jeweils wenigstens ein zu den Führungsbohrungen (31, 32) verlaufender, zweiter Schmiermittelkanal (48, 48') ausgebildet ist.

9. Hubkolben-Verbrennungskraftmaschine nach Anspruch 7 und 8, **dadurch gekennzeichnet, dass** der erste und zweite Schmiermittelkanal (45; 48, 48') durch wenigstens einen in einem Verbindungsbolzen (28) der gelenkigen Lagerung (23) verlaufenden Verbindungskanal (49) strömungsverbunden sind.

10. Hubkolben-Verbrennungskraftmaschine nach Anspruch 1, **dadurch gekennzeichnet, dass** die Ausgleichsmasse (14) in Ansicht parallel zur Führungsrichtung der Führungselemente (18,19) eine annähernd rechteckige Umrisskontur und in Ansicht parallel zur Kurbelwellenachse (22) eine annähernd bogen- oder sichelförmige Umrisskontur aufweist.

11. Hubkolben-Verbrennungskraftmaschine nach Anspruch 1, **dadurch gekennzeichnet, dass** die Ausgleichsmasse (14) in Ansicht parallel zur Führungsrichtung der Führungselemente (18, 19) eine annähernd rechteckige Umrisskontur aufweist und jedem Eckbereich der Ausgleichsmasse (14) ein Führungselement (18, 18'; 19,19') zugeordnet ist.

12. Hubkolben-Verbrennungskraftmaschine nach Anspruch 1, **dadurch gekennzeichnet, dass** ein Verbindungsbolzen (28) zwischen der Ausgleichsmasse (14) und dem Ausgleichspleuel (16) derart angeordnet ist, dass seine Bolzenachse (27) auf dem oder möglichst nahe zum Schwerpunkt, insbesondere Massenschwerpunkt, der Ausgleichsmasse (14) liegt.

## Claims

1. Reciprocating-piston internal combustion engine (1) having at least one engine cylinder (2, 3) and at least one piston (5, 6) oscillating therein, and having at least one balancing mass (14) which is driven in an oscillating manner by a crankshaft (11) via a crank throw (15) and a compensating connecting rod (16), and which is guided in a translatory fashion by means of a linear guide (17) assigned in each case to the respective balancing mass (14), and a bearing (23) for articulatedly connecting to the compensating connecting rod (16) is disposed on the balancing mass (14) in a middle portion, **characterized in that** at least two mutually spaced apart guide elements (18, 19) provided in the form of guide bolts (20, 21) fixedly connected to the engine housing constitute the linear guide (17) for the balancing mass (14), and guide bores (31, 32) cooperating with the guide bolts (20,21) are provided in the distal end portions of the balancing mass (14), and the guide elements (18, 19) are positioned at a radial distance (37, 38) on either side of the crankshaft axis (22) and are disposed spaced apart from one another in the axial direction with respect to the crankshaft axis (22) and the bearing (23) for articulated connecting to the balancing mass (14) is disposed between the both of the guide elements (18, 19) spaced apart from each other.

2. Reciprocating-piston internal combustion engine according to claim 1, **characterized in that** the guide bores (31, 32) are provided in the form of anti-friction bushes (33, 34) secured in mounting bores of the balancing mass (14).

3. Reciprocating-piston internal combustion engine according to claim 1, **characterized in that** the articulated bearing (23) between the compensating connecting rod (16) and the balancing mass (14) comprises a connecting bolt (28), the bolt axis (27) of which extends parallel with the crankshaft axis (22).

4. Reciprocating-piston internal combustion engine according to claim 1, **characterized in that** a radial distance (37, 38) between the guiding or longitudinal axis (39, 40) of a guide bolt (20, 21) and the crankshaft axis (22) is smaller in dimension than a maximum radius of rotation (41) of the counterweights (42) to the crankshaft cranks or smaller than the biggest radius of rotation (43) of the crank drives for the pistons (5, 6) of the reciprocating-piston engine.

5. Reciprocating-piston internal combustion engine according to claim 1, **characterized in that** the guide elements (18, 19) are connected to one another so as to be fixed via a connecting strut (50) at their ends remote from the engine housing.

6. Reciprocating-piston internal combustion engine according to claim 1, **characterized in that** guide bolts (20, 21) are provided in the form of hollow bodies, in particular hollow cylinders.

7. Reciprocating-piston internal combustion engine according to claim 1, **characterized in that** a first lubricant passage (45) connecting at least the first and second connecting rod eye (46, 47) is disposed in the compensating connecting rod (16), provided as a means of supplying the articulated bearing (23) on the balancing mass (14) with lubricant.

8. Reciprocating-piston internal combustion engine according to claim 1, **characterized in that** at least one second lubricant passage (48, 48') is provided running from the articulated bearing (23) on the balancing mass (14) to the guide bores (31, 32) in each case.

9. Reciprocating-piston internal combustion engine according to claim 7 and 8, **characterized in that** the first and second lubricant passage (45; 48, 48") are flow-connected via at least one connecting passage (49) extending through a connecting bolt (28) of the articulated bearing (23).

10. Reciprocating-piston internal combustion engine according to claim 1, **characterized in that** the balancing mass (14) has an approximately rectangular contour as viewed parallel with the guiding direction of the guide elements (18, 19) and an approximately arc-shaped or sickle-shaped contour as viewed parallel with the crankshaft axis (22).

11. Reciprocating-piston internal combustion engine according to claim 1, **characterized in that** the balancing mass (14) has an approximately rectangular contour as viewed parallel with the guiding direction of the guide elements (18, 19) and a guide element (18, 18'; 19, 19') is assigned to each corner region of the balancing mass (14).

12. Reciprocating-piston internal combustion engine according to claim 1, **characterized in that** a connecting bolt (28) between the balancing mass (14) and the compensating connecting rod (16) is disposed in such a way that its bolt axis (27) lies on or as close as possible to the center of gravity, in particular the mass center of gravity, of the balancing mass (14).

## Revendications

1. Moteur à combustion interne à piston alternatif (1) ayant au moins un cylindre de moteur (2, 3) et au moins un piston de moteur (5, 6) oscillant dans celui-ci et ayant au moins une masse d'équilibrage (14) entraînée en oscillation par un vilebrequin (11) par le biais d'un coude d'arbre (15) et d'une bielle d'équilibrage (16), qui est guidée en translation au moyen d'un guidage linéaire (17) adjoint respectivement à la masse d'équilibrage (14) respective, étant entendu qu'un support (23) est réalisé sur la masse d'équilibrage (14), dans une section médiane, aux fins de l'assemblage articulé avec la bielle d'équilibrage (16), **caractérisé en ce qu'**au moins deux éléments de guidage (18, 19) à distance l'un de l'autre, qui sont constitués par le biais de boulons de guidage (20, 21) assemblés de façon fixe avec le carter de moteur, forment le guidage linéaire (17) pour la masse d'équilibrage (14) et **en ce que** dans les sections d'extrémité distales de la masse d'équilibrage (14) sont réalisés des alésages de guidage (31, 32) qui coopèrent avec les boulons de guidage (20, 21), étant entendu que les éléments de guidage (18, 19) sont positionnés à une distance radiale (37, 38) des deux côtés de l'axe du vilebrequin (22) et sont agencés à distance l'un de l'autre dans la direction radiale par rapport à l'axe du vilebrequin (22) et que le support destiné à l'assemblage articulé avec la masse d'équilibrage est situé entre les deux éléments de guidage (18, 19) agencés à distance l'un de l'autre.

2. Moteur à combustion interne à piston alternatif selon la revendication 1, **caractérisé en ce que** les alésages de guidage (31, 32) sont constitués par des manchons coulissants (33, 34) fixés dans des alésages de réception de la masse d'équilibrage (14).

3. Moteur à combustion interne à piston alternatif selon la revendication 1, **caractérisé en ce que** le support articulé (23) entre la bielle d'équilibrage (16) et la masse d'équilibrage (14) comprend un boulon d'assemblage (28), dont l'axe de boulon (27) s'étend parallèlement à l'axe du vilebrequin (22).

4. Moteur à combustion interne à piston alternatif selon la revendication 1, **caractérisé en ce qu'**une distance radiale (37, 38) entre l'axe de guidage ou longitudinal (39, 40) d'un boulon de guidage (20, 21) et l'axe du vilebrequin (22) est plus petite qu'un rayon de rotation maximal (41) des contrepoids (42) par rapport aux coudes du vilebrequin ou plus petite que le plus grand rayon de rotation (43) des mécanismes de bielle pour les pistons du moteur (5, 6) du moteur à piston alternatif.

5. Moteur à combustion interne à piston alternatif selon la revendication 1, **caractérisé en ce que** les éléments de guidage (18, 19) sont assemblés de façon fixe l'un avec l'autre par le biais d'une barre d'assemblage (50) au niveau de leur extrémité opposée au carter du moteur.

6. Moteur à combustion interne à piston alternatif selon la revendication 1, **caractérisé en ce que** les boulons de guidage (20, 21) sont réalisés sous forme de corps creux, et en particulier de cylindres creux.

7. Moteur à combustion interne à piston alternatif selon la revendication 1, **caractérisé en ce que** dans la bielle d'équilibrage (16) est formé au moins un premier canal de lubrifiant (45) reliant le premier et le deuxième pieds de bielle (46, 47), qui est prévu pour alimenter en lubrifiant le support articulé (23) au niveau de la masse d'équilibrage (14).

8. Moteur à combustion interne à piston alternatif selon la revendication 1, **caractérisé en ce qu'**à partir du support articulé (23), il est formé au niveau de la masse d'équilibrage (14) au moins respectivement un deuxième canal de lubrifiant (48, 48') s'étendant jusqu'aux alésages de guidage (31, 32).

9. Moteur à combustion interne à piston alternatif selon la revendication 7 ou 8, **caractérisé en ce que** les premier et deuxième canaux de lubrifiant (45 ; 48, 48') communiquent par le biais d'au moins un canal de liaison (49) s'étendant dans un boulon d'assemblage (28) du support articulé (23).

10. Moteur à combustion interne à piston alternatif selon la revendication 1, **caractérisé en ce que** la masse d'équilibrage (14) présente, dans une perspective parallèle à la direction de guidage des éléments de guidage (18, 19), un contour extérieur sensiblement rectangulaire, et dans une perspective parallèle à l'axe du vilebrequin (22), un contour extérieur sensiblement en forme d'arc ou de faucille.

11. Moteur à combustion interne à piston alternatif selon la revendication 1, **caractérisé en ce que** la masse d'équilibrage (14) présente, dans une perspective parallèle à la direction de guidage des éléments de guidage (18, 19), un contour extérieur sensiblement rectangulaire et un élément de guidage (18, 18' ; 19, 19') est adjoint à chaque zone d'angle de la masse d'équilibrage (14).

12. Moteur à combustion interne à piston alternatif selon la revendication 1, **caractérisé en ce qu'**un boulon d'assemblage (28) est agencé entre la masse d'équilibrage (14) et la bielle d'équilibrage (16) de telle sorte que son axe de boulon (27) se situe sur le centre de gravité, en particulier le centre de masse, de la masse d'équilibrage (14) ou le plus près possible de celui-ci.
